Europäisches Patentamt

European Patent Office

Office européen des brevets

(19)

(11) **EP 1 166 152 B1**

(12) **EUROPÄISCHE PATENTSCHRIFT**

(45) Veröffentlichungstag und Bekanntmachung des Hinweises auf die Patenterteilung:
**29.09.2004   Patentblatt 2004/40**

(51) Int Cl.⁷: $G01V\ 1/00$

(86) Internationale Anmeldenummer:
**PCT/EP2000/002690**

(21) Anmeldenummer: **00920592.3**

(22) Anmeldetag: **27.03.2000**

(87) Internationale Veröffentlichungsnummer:
**WO 2000/060378 (12.10.2000 Gazette 2000/41)**

(54) **VERFAHREN ZUM AUFFINDEN, ZUR IDENTIFIZIERUNG DER ART UND DER GEOMETRISCHEN ABMESSUNGEN VON KOHLENWASSERSTOFFVORKOMMEN**

METHOD FOR LOCATING AND IDENTIFYING THE TYPE AND GEOMETRICAL DIMENSIONS OF HYDROCARBON DEPOSITS

PROCEDE POUR LOCALISER DES GISEMENTS D'HYDROCARBURES ET POUR IDENTIFIER LEUR TYPE ET LEURS DIMENSIONS GEOMETRIQUES

(84) Benannte Vertragsstaaten:
**AT BE CH CY DE DK ES FI FR GB GR IE IT LI LU MC NL PT SE**

(30) Priorität: **01.04.1999   DE 19915036**

(43) Veröffentlichungstag der Anmeldung:
**02.01.2002   Patentblatt 2002/01**

(73) Patentinhaber: **ADNR Technology Services GmbH
6648 Minusio (CH)**

(72) Erfinder:
• **CHUTOV, Gennadij,J. c/o ADNR Technology Services
  CH-6648 Minusio (CH)**
• **RODE, Ernst, D.
  CH-6648 Minusio (CH)**
• **MORITZ, Juergen
  D-69121 Heidelberg (DE)**

(74) Vertreter: **Patentanwälte Zellentin & Partner
Rubensstrasse 30
67061 Ludwigshafen (DE)**

(56) Entgegenhaltungen:
**US-A- 4 319 346        US-A- 5 148 110**

**Beschreibung**

Zum Auffinden von Rohstoffvorkommen und anderen Anomalien verursachenden Vorkommen in der Erdkruste sind unterschiedliche und meist unvollkommene Verfahren bekannt, die sich teilweise ergänzen. Historisch erfolgte die Auffindung von solchen Vorkommen insbesondere auch solcher von Öl und Gas nach dem Zufallsprinzip. Das ist auch heute noch weitgehend der Fall und extrem unbefriedigend. Aus der Häufung solcher Entdeckungen hat sich eine Systematik entwikkelt, die sich zunächst nur auf die Kenntnisse über die geologische Struktur der Erde und deren zeitgeschichtliche Entwicklung bezog.

Aufbauend darauf hat man Verfahren entwikkelt, die weitgehend technischer Natur sind und die Bestätigung von Hypothesen erleichtern, die aber nicht geeignet sind, definitive Voraussagen über die Existenz von Vorkommen und deren geographische Ausdehnung zu treffen. Mit dem Fortschreiten der Entwicklung und neuen technischen Möglichkeiten sind heute Verfahren bekannt, die zumindest eine Ortung möglicher Vorkommen erleichtern. Solche Verfahren sind u.a. Infrarotaufnahmen von Satelliten, magnetische Verfahren und seismische Verfahren, die eine Aussage über die geologische Struktur und teilweise auch über die Art der Vorkommen geben können. Diese Verfahren sind sowohl aktiver als auch passiver Art.

Aus der Entgegenhaltung US-A-51481 10 ist ein Verfahren zur Bestimmung einer räumlichen oder zeitlichen Anomalie unter der Erdoberfläche hinsichtlich deren Tiefe bekannt, wobei Amplitudenveränderungen im Erdrauschen beobachtet werden, die am Objekt in höheren Frequenzbereichen entstehen, also einem klassisch seismischen Verfahren zur Bestimmung von Strukturen entsprechen.

Bezogen auf die Erkundung von Kohlenwasserstoffvorkommen ist der Kenntnisstand auch heute noch sehr eingeschränkt und beschränkt sich weitgehend auf die Durchführung seismischer, geologischer, geophysikalischer, geochemischer Untersuchungen, die jedoch alle mehr oder weniger experimentiellen Charakter haben und definitive Voraussagen über die Art der Vorkommen nicht erlauben. Genaue Aussagen über die Art der Vorkommen können erst dann getroffen werden, wenn die Vorkommen bereits physisch erfasst sind.

Für die Auffindung von Kohlenwasserstoffvorkommen in neuen Regionen bedient man sich zunächst einmal der Untersuchung mit seismischen Methoden. Dabei wird durch eine oder mehrere Quellen ein Signal erzeugt, dessen Reflexionen an Inhomogenitäten wiederum durch Sensoren (Geophone) empfangen werden und deren zeitlicher Verlauf zur Identifizierung von Inhomogenitäten ausgewertet wird (Laufzeitmessung). Die Ergebnisse solcher Untersuchungen liefern Aufschluss über das Vorhandensein und den Verlauf von Inhomogenitäten, aber nicht über deren Ursache. Solche Untersuchungen können sowohl zwei- als auch dreidimensional ausgewertet werden. Sie sind aber nicht geeignet, die Art der Inhomogenität festzustellen, sondern geben nur Aufschluss über ihre Existenz, was wichtig aber nicht ausreichend ist.

Viele seismische Verfahren basieren auf der Untersuchung longitudinaler Wellenfronten, die durch eine oder mehrere Quellen wie Explosionen oder mechanische Vibrationen ausgelöst werden und deren einfache oder mehrfache Reflexionen an Inhomogenitäten des Untergrundes (des Transportmediums, des Ausbreitungsmediums) zu deren geometrischer Identifizierung ausgewertet werden, indem man die rücklaufende Wellenfront über im Gelände verteilte Sensoren (z.B. Geophone) aufnimmt. Anhand der Laufzeitverschiebung und der Dämpfung zwischen initiiertem Signal und empfangenem Signal gelingt es, Aufschlüsse über den geometrischen Verlauf auch von geologischen Formationen im Messgebiet zu ziehen.

Alle diese Verfahren arbeiten im Prinzip in einem sehr breiten Frequenzspektrum, meist oberhalb von 30 Hz. Durch Auswertung der Reflexionen kann man zwar Formationen als Abbild der Reflexionseigenschaft erkennen, man kann aber nicht erkennen. welcher Art diese Formationen sind. Solche Untersuchungen sind daher als "indirekt" zu bezeichnen.

Erst weitere "mechanische" Untersuchungen, nämlich die Niederbringung von Sondierungsbohrungen und die sequenzielle Untersuchung von Bohrkemen geben Aufschluss über die Art der Gesteine von Formationen, wobei die Aussagen solange nicht definitiv sind, solange eine Sondierungsbohrung nicht genau in das Vorkommen niedergebracht worden ist.

Diese Verfahren sind sehr teuer in ihrer Ausführung und können als Ergebnis zeigen, dass das, was man gefunden hat, nicht das ist, was man sucht. Die Erfolgsquote liegt bei diesen Verfahren bekanntlich weit unter 40%.

Zur Identifizierung von Rohstoffvorkommen sind auch Verfahren vorgeschlagen worden, die die Resonanz der gesamten Masse eines Vorkommens als Indikator für die Existenz und auch der Art nutzen.

Dabei soll der Einfluss der "Resonanz" auf einen oder mehrere durchstimmbare mechanische Oszillatoren (elektrisches Analogon wäre ein Saugkreis) ausgenutzt werden. Der Nachteil dieser Verfahren liegt darin, dass sie technisch kaum durchführbar sind und dass die anzuregende Resonanz, soweit sie sich auf abbaubare Vorkommen bezieht, in ihrer Frequenz streng abhängig ist von der geometrischen Ausdehnung der Vorkommen und nicht von deren Natur, d.h. für bestimmte Arten von Vorkommen charakteristische Grössen gibt es in diesem Falle nicht.

Aufgabe der Erfindung ist es, Angaben über die Eigenschaften und den Inhalt von Objekten, insbesondere Kohlenwasserstoffvorkommen, in einem System "Mehrphasiges Fluid in porösem Material" zu erhalten

Das Verfahren bezieht sich allgemein auf Vorkommen mehrphasiger fluider Systeme in porösen Körpern und insbesondere auf die Erkundung von unterirdischen Kohlenwasserstoffvorkommen.

Das Verfahren liefert eine direkte Aussage über die Art und Ausdehnung von Vorkommen, ohne dass zunächst Sondierungsbohrungen niedergebracht werden müssen. Es ist damit kostensparend, ökologisch vorteilhaft und es zur Überwachung von Veränderungen der Vorkommen (monitoring), was für eine effiziente Ausbeutung derartiger Lagerstätten von wesentlicher Bedeutung ist.

Diese Aufgabe wird durch ein Verfahren mit den Merkmalen des Anspruchs 1 gelöst. Vorteilhafte Ausgestaltungen der Erfindung sind den Unteransprüchen zu entnehmen.

Das erfindungsgemäss vorgeschlagene Verfahren bezieht sich auf die geometrische Ortung und die Bestimmung der Art von Lagerstätten oder von Anomalien verursachenden Vorkommen in der Erdkruste, insbesondere auf Vorkommen von Öl, Gas, Gaskondensat oder allgemein von Kohlenwasserstoffen. Unter Lagerstätten werden Vorkommen jeder Art in signifikanten, insbesondere ökonomisch nutzbaren, Konzentrationen, aber auch beliebige signifikant auftretende Körper, die gegenüber der Umgebung abgrenzbar sind, verstanden. Im Gegensatz zu den bekannten Verfahren liefert das erfindungsgemäss vorgeschlagene Verfahren eine Aussage über die Art und Natur der Vorkommen wie auch eine Aussage über deren geographische Lage und geometrische Ausdehnung. Es handelt sich dabei nicht um ein indirektes Verfahren, bei dem Schlüsse aus Sekundärerscheinungen gezogen werden, sondern das vorgeschlagene Verfahren ist -ein direktes Verfahren und kann eine Aussage quantitativer wie auch qualitativer Natur liefern.

Bei der Untersuchung von Vorkommen, die aus mehrphasigen fluiden Systemen in porösen Körpern bestehen, ist ein Effekt zu beobachten, der zur Bestimmung der Art der Vorkommen herangezogen werden kann und der Gegenstand der vorliegenden Erfindung ist:

Ein in einem "Kollektor" (eine zur Aufnahme von Kohlenwasserstoffen geeignete lithologische Formation) angesammeltes Kohlenwasserstoffvorkommen ist immer ein Mehrphasensystem mit unterschiedlicher "innerer Energie". Dieses System ist in der Lage, unterschiedliche energetische Zustände anzunehmen. Der Übergang von einem Energiezustand in einen anderen ist stets mit einer Energieaufnahme oder Energieabgabe verbunden.

Die Energieabgabe äussert sich durch Aussendung einer für das fluide System und damit für die Art und Natur des Vorkommens charakteristischen Frequenz. Diese Frequenz wird wesentlich bestimmt durch die Zusammensetzung des fluiden Systems, durch die Porösität des Kollektors und durch die Permeabilität des Kollektors und entspricht nicht der Eigenfrequenz des Vorkommens, die etwa durch Eigenschwingung des Massevolumens erzeugt werden könnte, d.h. sie ist nicht abhängig von der Geometrie des Vorkommens.

Ausserdem ist der genannte Effekt kein Resonanzeffekt im Sinne eines periodisch angeregten Resonators, sondern die Energieabgabe mit den charakteristischen Frequenzen erfolgt chaotisch. Die Häufigkeit der Energieabgaben ist abhängig von der Menge der von aussen zugeführten Energie. Zwischen der Häufigkeit der Energieabgabe und der abgegebenen charakteristischen Frequenz wurde kein Zusammenhang beobachtet, wohl aber wird ein Zusammenhang beobachtet zwischen der Häufigkeit der Energieabgabe und dem Volumen des Mehrphasensystems. Die abgegebene charakteristische Frequenz liegt für Kohlenwasserstoffvorkommen im Bereich zwischen 0,1 und ca. 10 Hz. So können etwa folgende charakteristische Frequenzen beobachtet werden:

| $F_{Öl}$ | $\sim$ 2,3 Hz |
|---|---|
| $F_{Gaskondensat}$ | $\sim$ 2,8 Hz |
| $F_{Gas}$ | $\sim$ 3,2 Hz |
| $F_{Wasser}$ | $\sim$ 5,8 Hz |

Die Frequenzen sind jedoch abhängig von den Eigenschaften des jeweiligen geomorphen und hydrostatischen/hydrodynamischen Systems. Sie sind u.a. abhängig von der Porösität, der Permeabilität, dem Druck, der Temperatur und der Viskosität.

Die Anregung erfolgt durch die Zufuhr von Energie, sowohl in Form thermischer als auch mechanischer Energie, verursacht durch das natürliche tektonische Erdrauschen oder durch andere quasimechanische Energiequellen z.B. von unterirdischen Pumpen.

Das sogenannte Erdrauschen hat den Verlauf eines breiten Spektrums meist longitudinaler mechanischer Wellen mit einer im ungestörten Fall mit 1/f verlaufenden Verteilung (f = Frequenz).

Die longitudinalen Wellen setzen sich durch das Vorkommen fort und können auf der Erdoberfläche in bekannter Weise mit empfindlichen Sensoren registriert werden.

Beim Durchlaufen des Vorkommens geben sie einen Teil ihrer Energie an das Vorkommen ab und nehmen aber auch einen Teil Energie in Form einer Modulation auf.

Der Vorgang der Energieaufnahme und -abgabe im fluiden System, welches partiell das Übertragungsmedium für die durch das Erdrauschen verursachten longitudinalen Wellen darstellt, ist ein nicht-linearer Prozess.

Somit erfahren alle vom Erdkörper verursachten und das Vorkommen durchdringenden Wellen eine Modulation mit der oder den charakteristischen Frequenzen des fluiden Systems.

Die charakteristischen Modulationsfrequenzen können dabei mehrfach und nebeneinander im Spektrum auftreten, denn sie sind je nach Zusammensetzung des fluiden Systems unterschiedlich und deshalb verändert sich die jeweils dominierende Frequenz in den einzelnen Messpunkten über ein Vorkommen hinweg an unterschiedlichen Orten.

Diesen Effekt nutzt das vorgeschlagene Verfahren zur Identifizierung von Kohlenwasserstoffvorkommen im Untergrund.

Dabei nutzt man im wesentlichen die Tatsache, dass Kohlenwasserstoffvorkommen immer in Verbindung mit Wasser auftreten und dass beide Medien ihre charakteristische Frequenz in getrennten Frequenzbereichen aufweisen. Zum Beispiel sind Kohlenwasserstoffe im Bereich von 2,0 bis 3,5 Hz (Kohlenwasserstofffenster) und Wasser im Bereich 4,5 bis 6,5 Hz (Wasserfenster) zu beobachten.

Die Messung der Anomalien in getrennten Frequenzbereichen gleichzeitig und die Korrelation der relativen Maxima in diesen Frequenzbereichen in bezug auf Frequenz und Amplitude ist der wesentliche Gegenstand der Erfindung.

Setzt man nämlich die beiden Amplitudenwerte der Maxima der getrennten Frequenzbereiche in ein Verhältnis, so kann man aus diesem Verhältnis B

$$B_i = \frac{AF1_i}{AF2_i}$$

(darin bedeuten AF1 das Amplitudenmaximum im Kohlenwasserstofffenster und AF2 das Amplitudenmaximum im Wasserfenster jeweils für den i - ten Messpunkt) und dessen Verlauf über das vermutete Vorkommen auf den Verlauf der Grenzen des Vorkommens schliessen, was ja Aufgabe der Erfindung ist.

Es gibt einen Wert $B_{min}$ für den gilt $B_i \geq B_{min} \geq$ 1, der die Grenzen des Vorkommens bestimmt. Genau lässt sich dieser Wert $B_{min}$ allerdings erst bestimmen aus einer Korrelation des zu untersuchenden Vorkommens mit schon bekannten Vorkommen und mit anderen geologischen und seismischen Daten. Das ist aber in erster Näherung für die Bestimmung des Vorkommens nicht von Bedeutung, da nur für die Orte überhaupt ein Interesse besteht, für die $B_i$ mindestens $\geq 1$ ist.

Aus dem Verlauf der Frequenzen der Maxima im Bereich des Vorkommens kann zusätzlich auf die Art des Vorkommens geschlossen werden.

Erfindungsgemäss werden zur messtechnischen Erfassung dieser Anomalien im Spektrum des Erdrauschens ein oder mehrere dreidimensional arbeitende Sensoren (Seismometer) verwendet, die im Frequenzbereich zwischen 0,1 und 20 Hz arbeiten.

Das von den Sensoren über einen längeren Zeitraum empfangene Signal wird gefiltert und einer Frequenzanalyse unterzogen und nach vorhandenen Anomalien untersucht.

Die messtechnische Erfassung dieser Signale und die Erkennung der Anomalien bedarf in der Regel eines sehr hohen apparativen und mathematischen Aufwandes, denn einerseits ist das zu erfassende Signal wegen seiner kleinen Amplitude im Störspektrum verborgen und andererseits sind die charakteristischen Frequenzen nicht streng monochromatisch, sondern über einen bestimmtem Spektralbereich verteilt.

Erfindungsgemäss erfolgt daher eine Identifizierung der Anomalien (der Nutzsignale) erst aus dem Vergleich der Spektren einer Vielzahl von Messpunkten auf einem Profil über ein Vorkommen hinweg.

Vorzugsweise erfolgt die Aufnahme der primär Signale durch eine Gruppe von mindestens drei Sensoren gleichzeitig, es ist jedoch auch möglich, einzelne zeitlich versetzte Aufnahmen zu einem pseudo Array zusammenzufügen.

Eine Korrelation der erhaltenen Messdaten mit seismischen Daten und den lithologischen Parametern des vermuteten Kollektors ermöglicht auch die Bestimmung des Volumens (Mächtigkeit) der untersuchten Vorkommen.

Dazu ist es auch sinnvoll die erhaltenen Messdaten mit solchen aus bereits bekannten geologisch analogen Vorkommen zu vergleichen.

Diese Methode der informations-theoretischen Auswertung ist weitgehend bekannt (siehe dazu auch Deutsche Patentschrift DE 2843849 C3) und wird zur Auswertung der Informationen, die erfindungsgemäss erhalten werden, benutzt, wobei vorzugsweise eine speziell dafür entwickelte Software zur Anwendung kommt.

Das vorgeschlagene Verfahren, das eine Aussage über Art und Ort der Vorkommen liefert, hat dadurch erhebliche ökonomische und auch ökologische Vorteile gegenüber den bisher üblichen und bekannten Verfahren. Die bisher übliche Anzahl von notwendigen Versuchsbohrungen kann drastisch reduziert werden, wodurch sich eine erhebliche Verminderung der für eine Exploration erforderlichen Kosten ergibt. Gleichzeitig werden dadurch auch in weitem Umfang Zerstörungen der Umwelt vermieden, die sonst bei der Niederbringung von Versuchsbohrungen in Kauf genommen werden mussen.

Nachstehend wird die Erfindung anhand von Phasen eines Ablaufschemas unter Bezug auf schematische Zeichnungen erläutert. Es zeigt:

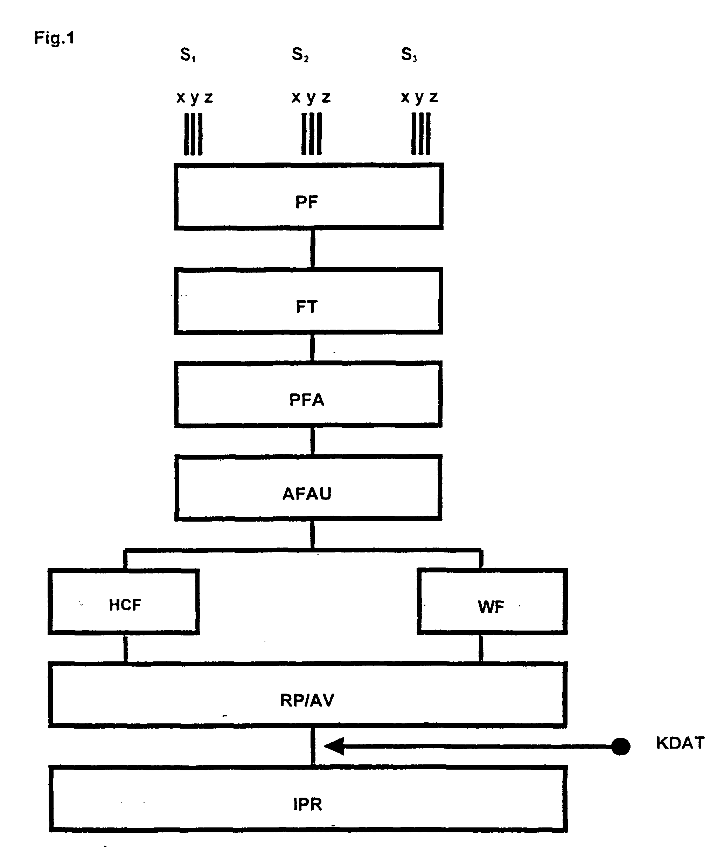

Fig.1 Die prinzipielle Darstellung der Verarbeitung der aufgenommenen Messdaten. Darin bedeuten

PF = Primärdatenfilter,
FT = Fouriertransformation.
PFA = Phasen/Frequenz/Amplituden Vergleich,
AFAU = Amplituden/Frequenzauswertung,
HCF = Kohlenwasserstofffenster,
WF = Wasser Fenster,

RP/AV = Reservoir Profil / Amplitudenverhältnis,

KDAT = Korrekturdaten aus bekannten Scenarien,

IPR = Interpretation des Reservoir Verlaufes.

Fig.2     Eine Messanordnung zur Erfassung der primären Messdaten für einen Messpunkt. Darin bedeuten

S1/S2/S3 = Sensoren
AE=Aufzeichnungseinheit (Datenrecorder).

Fig.3     Eine Verteilung von Messpunkten über ein Reservoir. Darin bedeuten

Pi = Messprofile,
$M_{ik}$ = Messpunkte
R = Reservoir

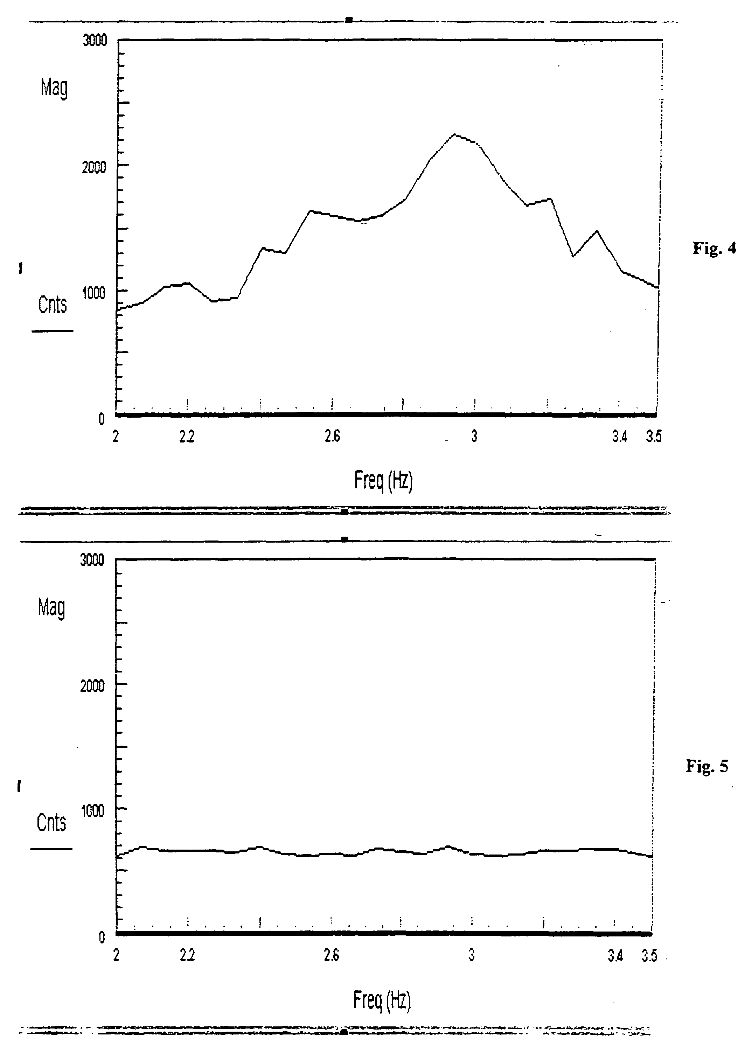

Fig.4     Eine typische Frequenzverteilung des korrelierten Signals der Sensorgruppe beim Vorhandensein von Kohlenwasserstoffen.

Fig.5     Eine typisch Frequenzverteilung des korrelierten Signals der Sensorgruppe beim Nichtvorhandensein von Kohlenwasserstoffen.

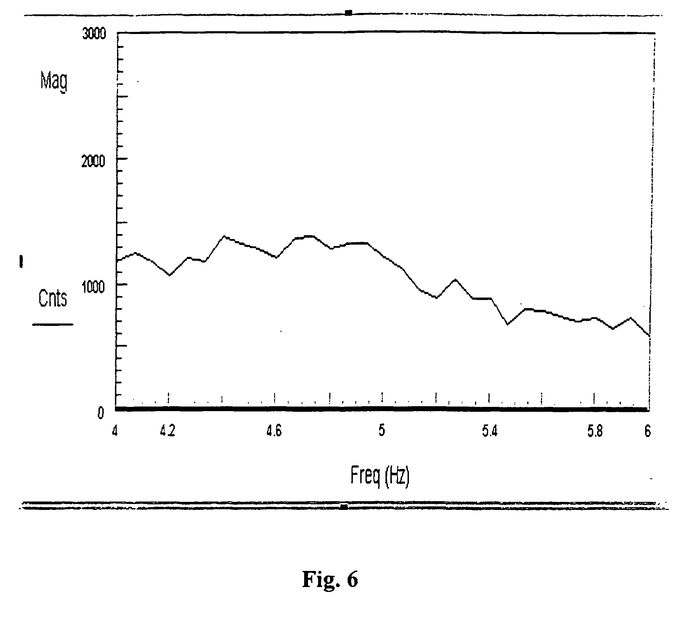

Fig.6     Eine typische Frequenzverteilung beim Vorhandensein von Wasser.

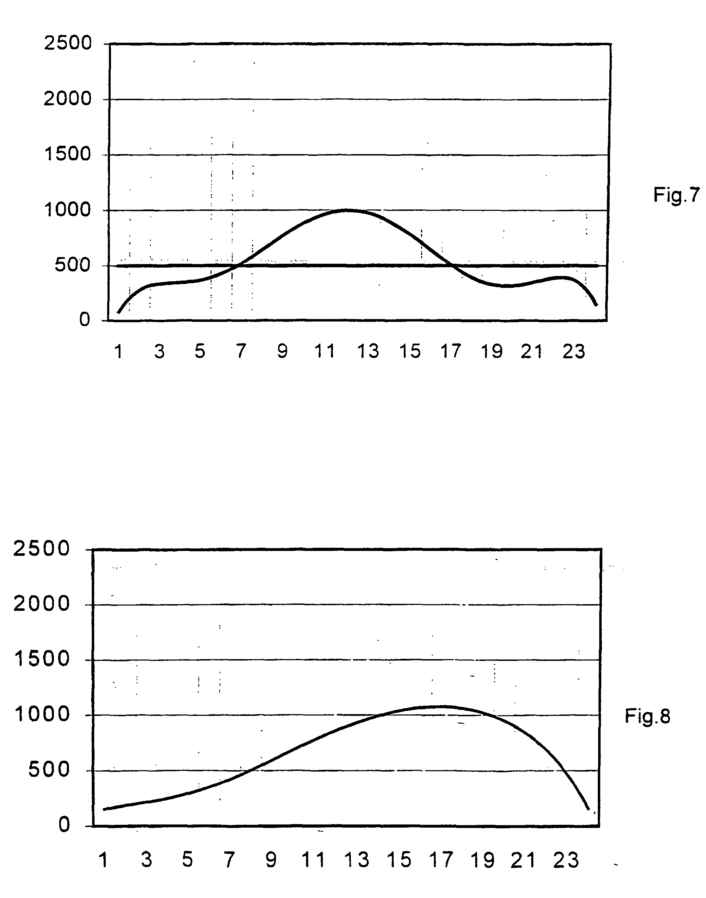

Fig.7     Ein typisches Messprofil über ein Vorkommen hinweg. Amplitudenwerte des Kohlenwasserstofffensters.

Fig.8     Ein typisches Messprofil über ein Vorkommen hinweg: Amplitudenwerte des Wasserfensters.

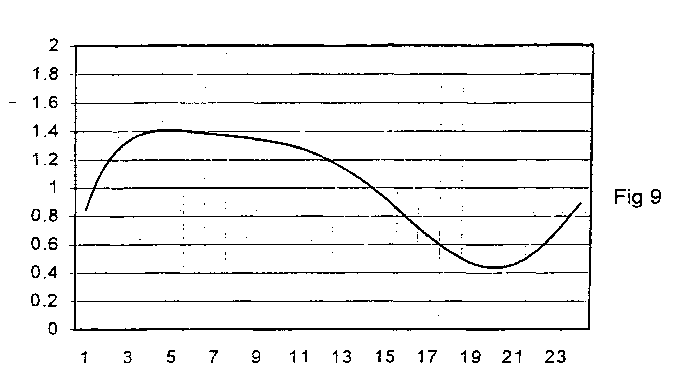

Fig.9     Ein typischer Verlauf des Verhältnisses der Maxima aus dem Kohlenwasserstofffenster und dem Wasserfenster.

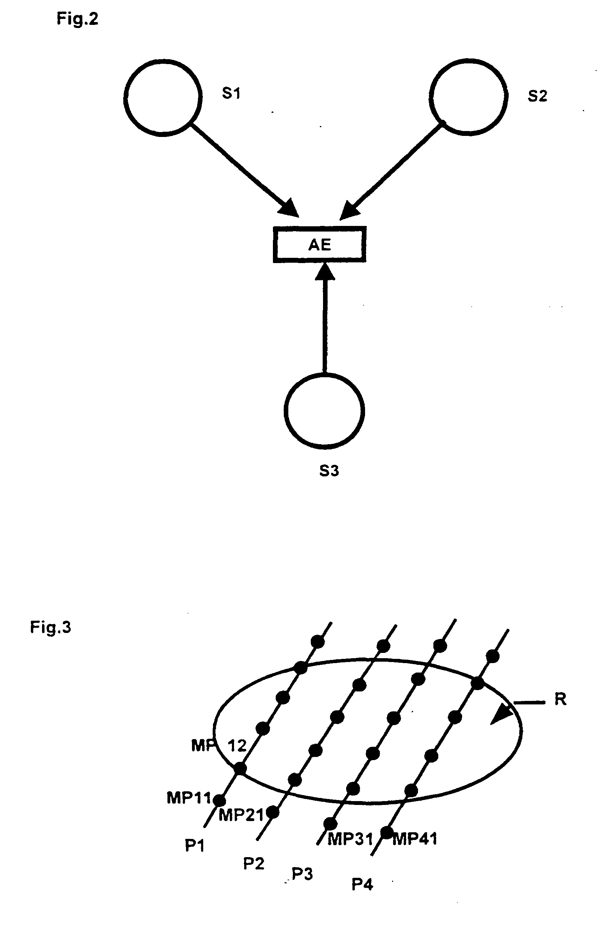

Phase 1.:     Mit der Anordnung gemäss Fig.2 werden die Messdaten mit den Sensoren S1/S2/S3 aufgenommen und in dem Recorder AE als digitale Information aufgezeichnet. Die Aufzeichnung erfolgt für alle Sensoren gleichzeitig und in den Komponenten x,y,z getrennt.
Die Aufzeichnungszeit liegt in der Grössenordnung von mehreren Minuten für jede einzelne Messung.
Die Messungen erfolgen gemäss Fig.3 an den Messpunkten $M_{ik}$ entlang den Profilen

Pi.

Phase 2.:     Die Messdaten (Primärdaten) werden nach der Verarbeitung in einem Korrelationsfilter (PF) einer Frequenzanalyse unterzogen (FT) und nach dem Vergleich von Phase, Amplitude, Frequenz (PFA) werden aus den korrelierten Daten die Frequenz und Amplitudenwerte ermittelt und in die entsprechenden "Fenster" HCF und WF übertragen.

Phase 3.:     Aus den erhaltenen Daten wird ein Reservoir Profil erstellt sowie der Verlauf des Amplitudenverhältnisses der Maxima aus den getrennten Frequenzfenstern ermittelt.

Phase 4.     Diese Daten werden mit denen aus bekannten Szenarien korreliert, was eine Interpretation IPR der Geometrie und des Inhaltes des Vorkommens ermöglicht.

Zu dieser prinzipiellen Darstellung muss hinzugefügt werden, dass es vorteilhaft ist, in einem zweiten Schritt die Messungen mit einer Vielzahl von Sensoren über das gesamte Vorkommen gleichzeitig durchzuführen. Das macht allerdings erst dann

Sinn, wenn das Vorhandensein von Kohlenwasserstoffen und die Grenzen des Vorkommens bereits bekannt sind.

In diesem Falle bildet die Gesamtheit aller Messpunkte $M_{ki}$ eine Sensorgruppe, die an jedem Messpunkt nur mit einem dreidimensionalen Sensor besetzt ist.

Bei der Durchführung der Messungen selbst ist es aus technischen Gründen sinnvoll, die Messdaten in bekannter Weise direkt am Sensor S zu digitalisieren und über ein Telemetriesystem zur Auswerteinheit AE zu übertragen. Das hat besonders dann Vorteile, wenn die Sensoren S nicht stationär angeordnet sind.

Das beschriebene Verfahren ist in seiner Anwendung nicht beschränkt auf Lagerstätten im Erdinneren, sondern es ist auch anwendbar auf jede Art mehrphasiger fluider Systeme in porösen Materialien.

Das beschriebene Verfahren kann sowohl "on shore" als auch "off shore" in beliebigen Wassertiefen angewendet werden.

**Patentansprüche**

**1.** Verfahren zum Auffinden, zur Identifizierung der Art und der geometrischen Abmessungen von Kohlenwasserstoffvorkommen und anderen fluiden Vorkommen unter Tage, **dadurch gekennzeichnet, dass** die durch ein Vorkommen hervorgerufenen Anomalien im akustischen Hintergrundrauschen mittels Sensoren gemessen, verschiedene für die jeweiligen Vorkommen charakteristische Frequenzen im Bereich 0,1 bis 10 Hz jeweils herausgefiltert und analysiert werden und dass die maximalen Amplitudenwerte der unterschiedlichen gemessenen Frequenzen in mindestens zwei unterschiedlichen Frequenzfenstern getrennt ausgewertet und dass die maximalen Amplitudenwerte miteinander in ein Verhältnis gesetzt werden und diejenigen Messpunkte ermittelt werden, für die mindestens gilt:

$$Bi = \frac{AF1i}{AF2i} \geq 1,$$

wobei AF1 das Amplitudenmaximum im Kohlenwasserstofffenster und AF2 das Amplitudenmaximum im Wasserfenster jeweils für den i - ten Messpunkt bedeuten.

2. Verfahren nach Anspruch 1, **dadurch gekennzeichnet, dass** die Messungen des akustischen Hintergrundrauschens mit mehreren dreidimensional arbeitenden Sensoren gleichzeitig ausgeführt werden.

3. Verfahren nach Anspruch 1 oder 2, **dadurch gekennzeichnet, dass** die Gesamtheit aller einzelnen Messpunkte zu einer Pseudo Gruppe zusammengefügt wird und die Auswahl von Messprofilen allein durch Kombination mehrerer einzelner Messpunkte nachträglich bei der Auswertung erfolgt.

4. Verfahren nach einem der Ansprüche 1 bis 3, **dadurch gekennzeichnet, dass** die als Ergebnisse der Messungen erhaltenen Messprofile mit bekannten geophysikalischen und/oder geochemischen und/oder geoelektrischen und/oder geologischen Informationen korreliert werden.

5. Verfahren nach einem der Ansprüche 1 bis 4, **dadurch gekennzeichnet, dass** eine zusätzliche Anregung des ermittelten Vorkommens durch zusätzliche von aussen zugeführte Energie einer künstlichen Energiequelle erfolgt.

6. Verfahren nach einem der Ansprüche 1 bis 5, **dadurch gekennzeichnet, dass** Sensoren eingesetzt werden, die nach einer abgeschlossenen Messung jederzeit wieder aktivierbar sind.

## Claims

1. Method for locating and identifying the type and geometrical dimensions of hydrocarbon deposits and other underground fluid deposits, **characterized in that** the anomalies in the acoustic background noise that are caused by such deposits are measured by means of sensors, that various frequencies that are typical of the particular deposits and are ranging from 0.1 to 10 Hz are filtered out and analyzed, and that the maximum amplitude values of the various frequencies measured are separately evaluated in at least two different frequency windows, and that the maximum amplitude values are set into relation to each other and those measuring points are determined to which at least the following applies:

$$Bi = \frac{AF1i}{AF2i} \geq 1,$$

wherein AF1 is the maximum amplitude in the hydrocarbon window and AF2 is the maximum amplitude in the water window, each for the $i^{th}$ measuring point.

2. Method according to Claim 1, **characterized in that** the measurements of the acoustic background noise are carried out with simultaneous use being made of several three-dimensionally operating sensors.

3. Method according to Claim 1 or 2, **characterized in that** the whole of all individual measuring points is comprised to form a pseudo group and that measurement profiles are solely selected subsequently in the course of evaluation by combining several individual measuring points.

4. Method according to one of Claims 1 through 3, **characterized in that** the measurement profiles obtained from the measurement results are correlated with known geophysical and/or geochemical and/or geoelectrical and/or geological information.

5. Method according to one of Claims 1 through 4, **characterized in that** the deposits located are, in addition, excited by additional externally supplied energy of an artificial energy source.

6. Method according to one of Claims 1 through 5, **characterized in that** use is made of sensors that can be reactivated at any time after a completed measurement.

## Revendications

1. Procédé de localisation de gisements d'hydrocarbures et d'autres gisements de fluides souterrains et d'identification du type et des dimensions géométriques de ceux-ci, **caractérisé en ce que** les anomalies provoquées par un gisement dans le bruit de fond acoustique sont mesurées par l'intermédiaire de capteurs, différentes fréquences caractéristiques des gisements respectifs dans l'intervalle allant de 0,1 à 10 Hz étant respectivement extraites par filtration et analysées, les valeurs d'amplitude maximales des différentes fréquences mesurées étant évaluées séparément dans au moins deux fenêtres de fréquence différentes, les valeurs d'amplitude maximales étant mises en relation et les points de mesure auxquels s'applique au moins la relation suivante:

$$Bi = \frac{AF1i}{AF2i} \geq 1,$$

étant déterminés, AF1 représentant l'amplitude maximale dans la fenêtre des hydrocarbures et AF2 l'amplitude maximale dans la fenêtre de l'eau respectivement pour le inième point de mesure.

**2.** Procédé selon la revendication 1, **caractérisé en ce que** les mesures du bruit de fond acoustique sont effectuées simultanément avec plusieurs capteurs à fonctionnement tridimensionnel.

**3.** Procédé selon les revendications 1 ou 2, **caractérisé en ce que** la totalité de tous les points de mesure individuels est rassemblée en un pseudo-groupe, la sélection de profils de mesures étant réalisée ultérieurement lors de l'évaluation par la seule combinaison de plusieurs points de mesure individuels.

**4.** Procédé selon l'une des revendications 1 à 3, **caractérisé en ce que** les profils de mesure obtenus sous forme de résultats des mesures sont mis en corrélation avec des informations géophysiques et/ou géochimiques et/ou géo-électriques et/ou géologiques connues.

**5.** Procédé selon l'une des revendications 1 à 4, **caractérisé en ce qu'**une nouvelle activation du gisement détecté est effectuée par une énergie additionnelle provenant de l'extérieur à partir d'une source d'énergie artificielle.

**6.** Procédé selon l'une des revendications 1 à 5, **caractérisé en ce qu'**il utilise des capteurs pouvant à tout moment être réactivés après l'achèvement d'une mesure.

Fig.1

$S_1$    $S_2$    $S_3$

x y z    x y z    x y z

```
|||      |||      |||
```

| PF |
|---|

| FT |
|---|

| PFA |
|---|

| AFAU |
|---|

| HCF |  | WF |
|---|---|---|

| RP/AV |
|---|

← ● KDAT

| IPR |
|---|

**Fig.2**

**Fig.3**

Fig. 4

Fig. 5

**Fig. 6**

Fig.7

Fig.8

Fig 9